# EUROPEAN PATENT APPLICATION

(11) **EP 3 786 028 A1**
(43) Date of publication of application: **03.03.2021**
(21) Application number: 19793716.2
(22) Date of filing: 22.04.2019
(51) Int. Cl.: B61L 23/00, B60L 15/40

(54) **SAFE-DRIVING ASSISTANCE DEVICE**

(30) Priority: 24.04.2018 JP 2018083284
(71) Applicant: KABUSHIKI KAISHA TOSHIBA, Minato-ku Tokyo 105-0023 (JP); Toshiba Infrastructure Systems & Solutions Corporation, Kawasaki-shi, Kanagawa 212-0013 (JP)
(72) Inventor: FUTAGAMI, Takuya, Tokyo 105-0023 (JP); KOBAYASHI, Hiroyuki, Tokyo 105-0023 (JP); TAKAHASHI, Yusuke, Tokyo 105-0023 (JP); HORIE, Masahiro, Tokyo 105-0023 (JP); SAGUCHI, Taichi, Kawasaki-shi, Kanagawa 212-0013 (JP); NAKAMURA, Kohta, Kawasaki-shi, Kanagawa 212-0013 (JP); YASUDA, Koji, Kawasaki-shi, Kanagawa 212-0013 (JP); SETO, Naoto, Tokyo 105-0023 (JP); HATTORI, Yohei, Kawasaki-shi, Kanagawa 212-0013 (JP)
(74) Representative: Hoffmann Eitle
(86) International application number: PCT/JP2019/016973
(87) International publication number: WO 2019/208479

(57) **Abstract**

A safe-driving assistance apparatus according to an embodiment includes a storage unit, a position acquisition unit, a detection range acquisition unit, a detector, and an output unit. The storage unit stores detection range information representing a correspondence between a position of a railroad vehicle and a detection range where information about an obstacle present in a traveling direction of the railroad vehicle is to be detected. The position acquisition unit acquires a current position of the railroad vehicle. The detection range acquisition unit acquires the detection range corresponding to the current position, based on the current position acquired by the position acquisition unit and the detection range information stored in the storage unit. The detector detects information about the obstacle from the detection range acquired by the detection range acquisition unit. The output unit outputs a detection result of the detector.

## Description

### FIELD

The present invention relates to a safe-driving assistance apparatus.

### BACKGROUND

Conventionally, as a technique for realizing safe driving of a railroad vehicle, there is known a technique of providing a camera on a railroad track and detecting, for example, presence or absence of an obstacle in a traveling direction of the railroad vehicle based on an image obtained from the camera.

### CITATION LIST

### Patent Literature

Patent Literature 1: Japanese Patent No. 5096959
Patent Literature 2: Japanese Laid-open Patent Publication No. 2004-009993

### SUMMARY OF THE INVENTION

### Problem to be Solved by the Invention

However, the image obtained from the camera on the railroad track includes only information about a region of a specific range of the railroad track. Therefore, in order to precisely cover an entire traveling range of the railroad vehicle by such a conventional technique, it is necessary to provide a plurality of cameras over all sections of the railroad track, which causes inconvenience in terms of cost and maintainability.

Therefore, it is desired to realize highly accurate detection of information about the obstacle that may be present in the traveling direction of the railroad vehicle over the entire traveling range of the railroad vehicle.

### Means for Solving Problem

A safe-driving assistance apparatus according to an embodiment includes a storage unit, a position acquisition unit, a detection range acquisition unit, a detector, and an output unit. The storage unit stores detection range information representing a correspondence between a position of a railroad vehicle and a detection range where information about an obstacle present in a traveling direction of the railroad vehicle is to be detected. The position acquisition unit acquires a current position of the railroad vehicle. The detection range acquisition unit acquires the detection range corresponding to the current position, based on the current position acquired by the position acquisition unit and the detection range information stored in the storage unit. The detector detects information about the obstacle from the detection range acquired by the detection range acquisition unit. The output unit outputs a detection result of the detector.

### BRIEF DESCRIPTION OF DRAWINGS

FIG. 1 is an exemplary and schematic block diagram illustrating a system configuration of a safe-driving assistance apparatus according to a first embodiment.
FIG. 2 is an exemplary and schematic block diagram illustrating functions of the safe-driving assistance apparatus according to the first embodiment.
FIG. 3 is an exemplary and schematic flowchart illustrating an example of flow of a process performed by each unit of the safe-driving assistance apparatus according to the first embodiment.
FIG. 4 is an exemplary and schematic diagram illustrating examples of a detection range and a detection result for the detection range according to the first embodiment.
FIG. 5 is an exemplary and schematic diagram illustrating examples of the detection range and detection range information for specifying the detection range according to the first embodiment.
FIG. 6 is an exemplary and schematic diagram illustrating an example of a notification screen provided for notification of the detection result by the safe-driving assistance apparatus according to the first embodiment.
FIG. 7 is an exemplary and schematic diagram illustrating another example of the notification screen provided by the safe-driving assistance apparatus according to the first embodiment, which is different from FIG. 6.
FIG. 8 is an exemplary and schematic diagram illustrating still another example of the notification screen provided by the safe-driving assistance apparatus according to the first embodiment, which is different from FIGS. 6 and 7.
FIG. 9 is an exemplary and schematic diagram illustrating still another example of the notification screen provided by the safe-driving assistance apparatus according to the first embodiment, which is different from FIGS. 6 to 8.
FIG. 10 is an exemplary and schematic block diagram illustrating the functions of the safe-driving assistance apparatus according to a second embodiment.
FIG. 11 is an exemplary and schematic diagram illustrating examples of position conversion information held by the safe-driving assistance apparatus according to the second embodiment and a method of using the position conversion information.
FIG. 12 is an exemplary and schematic diagram illustrating an example of detection range information according to a modification of the second embodiment.
FIG. 13 is an exemplary and schematic block diagram illustrating the functions of the safe-driving assistance apparatus according to a third embodiment.
FIG. 14 is an exemplary and schematic flowchart illustrating an example of flow of a process performed by each unit of the safe-driving assistance apparatus according to the third embodiment.
FIG. 15 is an exemplary and schematic diagram illustrating examples of a branch and branch information about the branch according to the third embodiment.
FIG. 16 is an exemplary and schematic diagram illustrating an example of the detection range according to the third embodiment.
FIG. 17 is an exemplary and schematic block diagram illustrating the functions of the safe-driving assistance apparatus according to a fourth embodiment.
FIG. 18 is an exemplary and schematic diagram illustrating an example of a setting screen for manually setting the detection range provided by the safe-driving assistance apparatus according to the fourth embodiment.

### DETAILED DESCRIPTION

Embodiments will be described below with reference to the drawings. Configurations of the embodiments described below and operations and results (effects) provided by the configurations are mere examples, and the present invention is not limited to the following description.

### <First Embodiment>

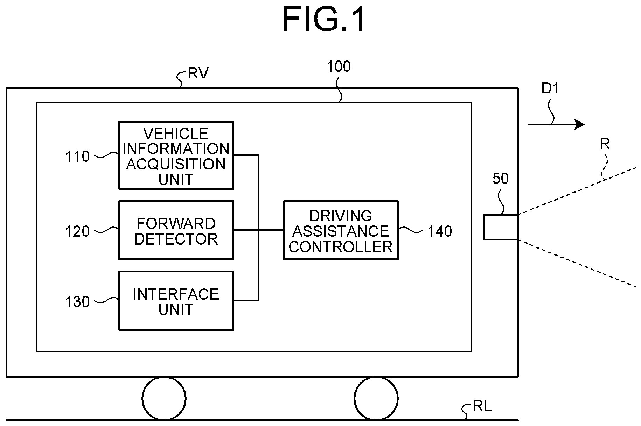

FIG. 1 is an exemplary and schematic block diagram illustrating a system configuration of a safe-driving assistance apparatus 100 according to a first embodiment. The safe-driving assistance apparatus 100 is a system mounted on a railroad vehicle RV for realizing safe driving of the railroad vehicle RV that travels along a railroad track RL. In FIG. 1, a traveling direction of the railroad vehicle RV is illustrated as an arrow D1.

Conventionally, as a technique for realizing the safe driving of the railroad vehicle RV, there is known a technique of providing a camera on the railroad track RL and detecting, for example, presence or absence of an obstacle in the traveling direction of the railroad vehicle RV based on an image obtained from the camera. However, the image obtained from the camera on the railroad track RL includes only information about a region of a specific range of the railroad track RL. Therefore, in order to precisely cover an entire traveling range of the railroad vehicle RV by such a conventional technique, it is necessary to provide a plurality of cameras over all sections of the railroad track RL, which causes inconvenience in terms of cost and maintainability.

Therefore, in the first embodiment, based on the configuration described below, it is possible to detect information about the obstacle that may be present in the traveling direction of the railroad vehicle RV with high accuracy over the entire traveling range of the railroad vehicle RV.

As illustrated in FIG. 1, the safe-driving assistance apparatus 100 includes a vehicle information acquisition unit 110, a forward detector 120, an interface unit 130, and a driving assistance controller 140. These respective units are communicably connected to each other.

The vehicle information acquisition unit 110 acquires vehicle information such as position information indicating a position of the railroad vehicle RV. Although details will be described below, in the first embodiment, the vehicle information acquisition unit 110, for example, based on an output of a speed generator (tachogenerator) provided on an axle, a traveling distance of the railroad vehicle RV from a specific point (such as a last stop station) is calculated, and the calculated traveling distance is obtained as the position information.

The forward detector 120 detects the information about the obstacle that may be present in a region in the traveling direction of the railroad vehicle RV based on a captured image obtained by a camera 50 provided to capture the region in the traveling direction (the arrow D1 in FIG. 1) of the railroad vehicle RV. Although details will be described below, the information about the obstacle includes presence or absence of the obstacle, a distance to the obstacle, and so on.

The interface unit 130 is a device that receives an operation input of a driver or the like of the railroad vehicle RV, and outputs a notification to an occupant such as a driver or a passenger of the railroad vehicle RV.

The driving assistance controller 140 is a controller that performs various controls for realizing the safe driving of the rail vehicle RV.

In the first embodiment, the vehicle information acquisition unit 110, the forward detector 120, the interface unit 130, and the driving assistance controller 140 are all configured as computer devices having a hardware processor such as a CPU (Central Processing Unit). Therefore, the vehicle information acquisition unit 110, the forward detector 120, the interface unit 130, and the driving assistance controller 140 can realize functions described below by executing predetermined computer programs by their respective hardware processors.

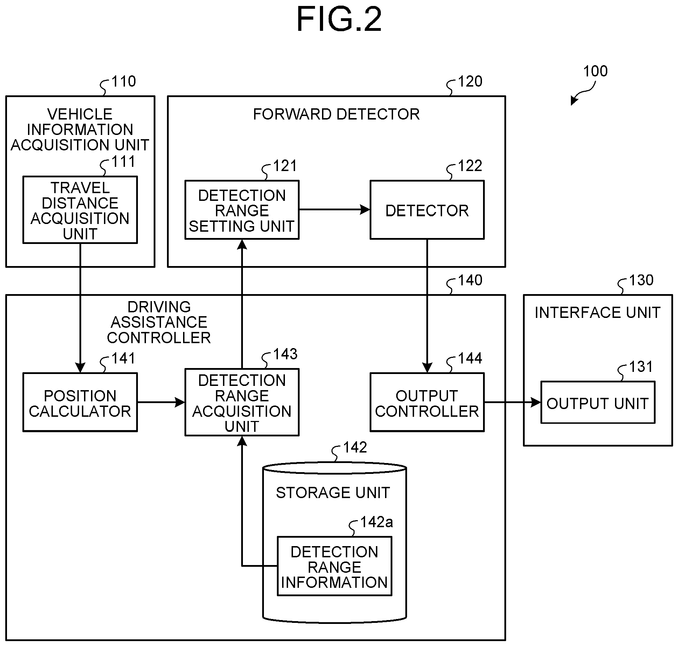

FIG. 2 is an exemplary and schematic block diagram illustrating the functions of the safe-driving assistance apparatus 100 according to the first embodiment. In the first embodiment, each function illustrated in FIG. 2 may be implemented only by dedicated hardware (circuitry).

As illustrated in FIG. 2, the vehicle information acquisition unit 110 has a travel distance acquisition unit 111. The forward detector 120 has a detection range setting unit 121 and a detector 122. The interface unit 130 has an output unit 131. The driving assistance controller 140 has a position calculator 141, a storage unit 142, a detection range acquisition unit 143, and an output controller 144. In the storage unit 152, detection range information 142a is stored.

Hereinafter, details of each function illustrated in FIG. 2 will be described together with its operation (process flow).

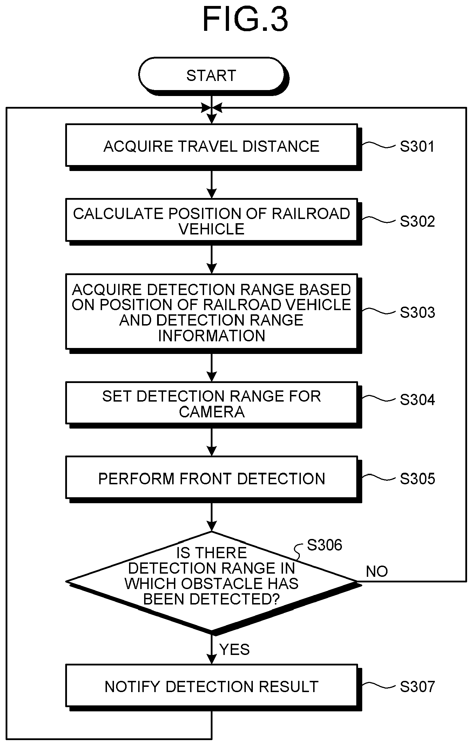

FIG. 3 is an exemplary and schematic flowchart illustrating an example of flow of a process performed by each unit of the safe-driving assistance apparatus 100 according to the first embodiment. The process flow illustrated in FIG. 3 is performed during traveling of the railroad vehicle RV.

As illustrated in FIG. 3, in the first embodiment, in S301, the travel distance acquisition unit 111 of the vehicle information acquisition unit 110 calculates (acquires) the travel distance of the railroad vehicle RV from the specific point (such as the last stop station) as a starting point based on the output of the speed generator (tachogenerator) provided on the axle. More specifically, the travel distance acquisition unit 111 acquires a movement amount of the railroad vehicle RV per unit time based on the output of the speed generator, and calculates the travel distance by calculating an integrated value of the movement amount. Then, the travel distance acquisition unit 111 outputs the calculated travel distance to the position calculator 141 of the driving assistance controller 140.

Then, in S302, the position calculator 141 calculates a current position of the railroad vehicle RV based on the travel distance acquired from the travel distance acquisition unit 111. More specifically, the position calculator 141 adds or subtracts the travel distance from a kilometrage indicating a position of a specific starting point, in consideration of the traveling direction of the railroad vehicle RV with the travel distance acquired from the travel distance acquisition unit 111, to calculate the current position of the railroad vehicle RV as the kilometrage. The kilometrage is an index indicating a unique position set on the railroad track RL. Then, the position calculator 141 outputs the calculated current position to the detection range acquisition unit 143 of the driving assistance controller 140.

Then, in S303, the detection range acquisition unit 143 acquires a detection range that is a range where the information about the obstacle present in the traveling direction of the railroad vehicle RV is to be detected, the detection range being acquired based on the current position obtained from the position calculator 141 and the detection range information 142a stored in the storage unit 142 of the driving assistance controller 140.

The detection range where the detection is performed is basically a region on the railroad track RL in front of the traveling direction of the railroad vehicle RV. However, it may be desirable to detect the information about the obstacle also from a region other than the region on the railroad track RL depending on the position of the railroad vehicle RV. For example, in a case where the current position of the railroad vehicle RV is near a platform of a railroad station, it is desirable that the detection range also include a region near the platform in addition to the region on the railroad track RL.

Therefore, in the first embodiment, the detection range is variously set depending on the position of the railroad vehicle RV. That is, in the first embodiment, the detection range information 142a indicates a correspondence between the position of the railroad vehicle RV and the detection range to be set as a detection target at the position (a concrete example will be described below). Thus, the detection range acquisition unit 143 can appropriately acquire the detection range to be set as the detection target at the current position by referring to the detection range information 142a based on the current position obtained from the position calculator 141. The detection range acquired by the detection range acquisition unit 143 is output to the detection range setting unit 121 of the forward detector 120.

In S304, the detection range setting unit 121 sets the detection range for the camera 50 by performing, for example, viewpoint conversion on the detection range acquired from the detection range acquisition unit 143. Then, the detection range setting unit 121 outputs the set detection range to the detector 122 of the forward detector 120.

Then, in S305, the detector 122 detects the information about the obstacle (such as presence or absence of the obstacle and the distance to the obstacle) from the region corresponding to the detection range set in S304 in the captured image obtained by the camera 50.

Processes of S303 to S305 described above will be described in more detail with reference to the drawings.

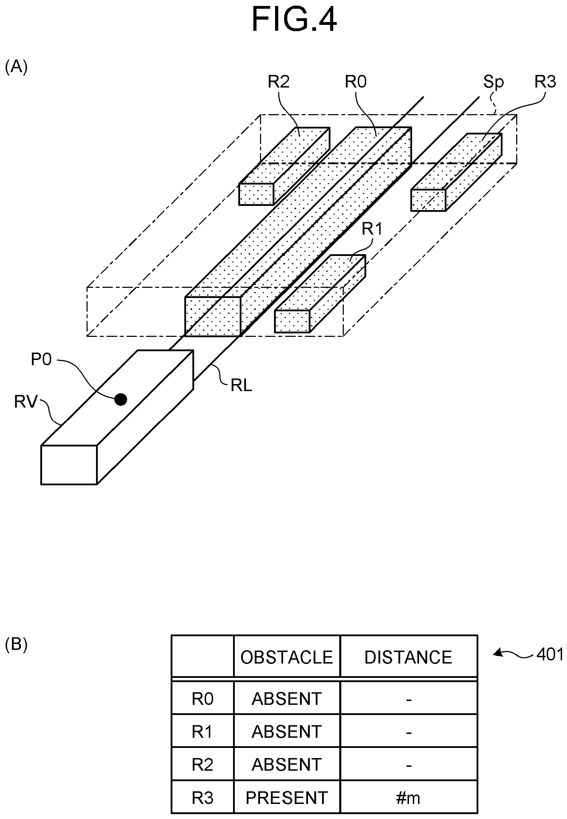

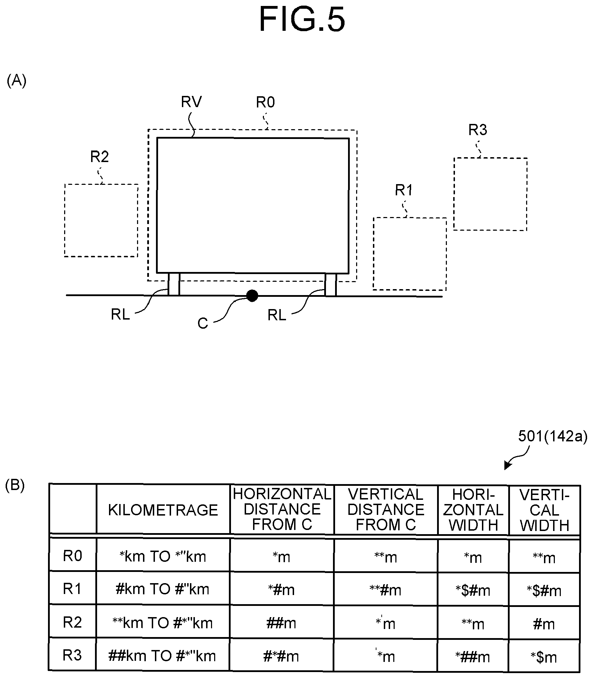

FIG. 4 is an exemplary and schematic diagram illustrating examples of the detection range and a detection result for the detection range according to the first embodiment, and FIG. 5 is an exemplary and schematic diagram illustrating examples of the detection range and the detection range information 142a for specifying the detection range according to the first embodiment.

In an example illustrated in FIGS. 4 and 5, four regions (spaces) R0 to R3 are defined as the detection ranges in a case where the railroad vehicle RV is at a position P0. More specifically, in this example, as illustrated in FIG. 4(A) and FIG. 5(A), the region R0 is defined as the region on the railroad track RL, the region R1 is defined as a region on a right side of the railroad track RL as seen from the railroad vehicle RV, the region R2 is defined as a region on a left side of the railroad track RL as seen from the railroad vehicle RV, and the region R3 is defined as a region on a right side and an upper side of the region R1 as seen from the railroad vehicle RV. The regions R0 to R3 are all located in a space Sp forward in the traveling direction of the railroad vehicle RV.

The above-mentioned regions R0 to R3 are the detection range when the railroad vehicle RV is at the position P0. Thus, when the railroad vehicle RV is at another position, regions other than the regions R0 to R3 can be set as the detection ranges. Here, out of the above-mentioned regions R0 to R3, the region R0 that is the region on the railroad track RL is basically desired to be always set as the detection target. Therefore, the region R0 may be always set as the detection target based on a region corresponding to a vehicle limit or a construction limit. The vehicle limit is upper, lower, left, and right limits where any part of the railroad vehicle RV must not exceed, and the construction limit is a space secured on the railroad track RL, in which buildings and the like must not enter for the railroad vehicle RV to travel safely. Depending on the position of the railroad vehicle RV, there may be no problem even when the region R0 is excluded from the detection target, and thus, in the first embodiment, the region R0 is not always the detection target.

The above-mentioned regions R0 to R3 are specified based on, for example, information 501 in a table format as illustrated in FIG. 5(B). The information 501 is obtained by extracting the detection range corresponding to the position P0 (See FIG. 4(A)) from the detection range information 142a indicating the correspondence between the position of the railroad vehicle RV and the detection range. Therefore, it is possible to acquire information for specifying the regions R0 to R3 as the detection range corresponding to the position P0 (See FIG. 4(A)) from the information 501.

More specifically, the information 501 is configured as a list of information representing a depth of each of the regions R0 to R3 (See a column of "kilometrage"), information representing a horizontal distance (distance in the horizontal direction) and a vertical distance (distance in the vertical direction) from a center C (See FIG. 5(A)) of the railroad track RL of each of the regions R0 to R3 (See columns of "horizontal distance" and "vertical distance"), and information representing a horizontal width (width in the horizontal direction) and a vertical width (width in the vertical direction) of each of the regions R0 to R3 (See columns of "horizontal width" and "vertical width"). That is, the information 501 has a data structure in which the position and the range of each of the regions R0 to R3 can be known when a position of the center C of the railroad track RL is known.

The position of the center C of the railroad track RL can be derived by calculation when the position of the railroad vehicle RV (position P0 in an example described here) is known. Therefore, the detection range acquisition unit 143 according to the first embodiment can specify the detection range to be set as the detection target based on the position of the railroad vehicle RV calculated by the position calculator 141 and the detection range information 142a stored in the storage unit 142.

Then, in the first embodiment, the detection result for the detection range specified as described above is, for example, output in the format as illustrated in FIG. 4(B). As illustrated in FIG. 4(B), the detection result output in the first embodiment includes (at least) two types of information of presence or absence of the obstacle and the distance to the obstacle. As an example, FIG. 4(B) illustrates a case where it is detected that there are no obstacles in the regions R0 to R2 and there is the obstacle only in the region R3. In the first embodiment, such a detection result is output from the detector 122 of the forward detector 120 to the output unit 131 of the interface unit 130 through the output controller 144 of the driving assistance controller 140.

Returning to FIG. 3, in S306, the output unit 131 determines, based on the detection result obtained through the output controller 144, whether there is the detection range where the obstacle has been detected out of the detection ranges set as the detection target this time.

When it is determined in S306 that there is no detection range where the obstacle has been detected, it is not necessary to notify the occupant of the information about the obstacle. Therefore, in this case, the process returns to S301.

On the other hand, when it is determined in S306 that there is the detection range where the obstacle has been detected, it is necessary to notify the occupant of the information about the obstacle for safety. Therefore, in this case, the process proceeds to S307, and in S307, the output unit 131 notifies the occupant of the detection result. Then, the process returns to S301.

As a method of notifying the detection result, various methods are conceivable, such as a method of appealing to auditory sense using sound, and a method of appealing to visual sense using a liquid crystal display, projection mapping, or a holography. Hereinafter, some examples of the method of appealing to the visual sense will be described with reference to the drawings. In the examples described below, it is assumed that the detection result as illustrated in FIG. 4(B) has been obtained.

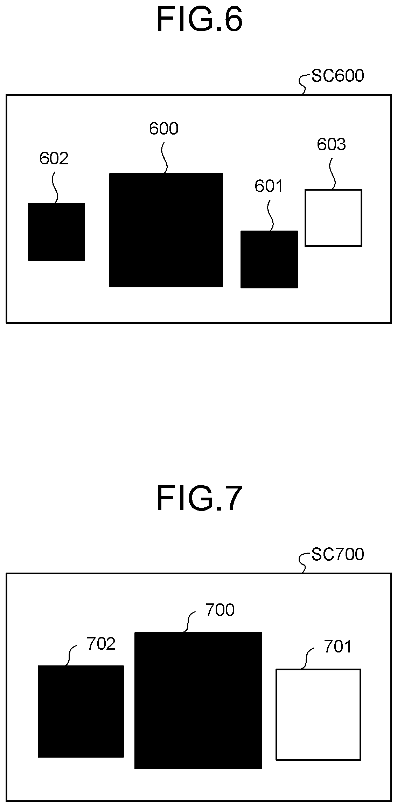

FIG. 6 is an exemplary and schematic diagram illustrating an example of a notification screen output for notification of the detection result by the safe-driving assistance apparatus 100 according to the first embodiment. Four images 600 to 603 are displayed on a screen SC600 illustrated in FIG. 6. The four images 600 to 603 respectively correspond to the regions R0 to R3 as the detection ranges, in terms of positional relationship, size and the like.

In the first embodiment, the detection result of the information about the obstacle is output in a form capable of identifying which of the detection ranges is obtained as the target. Therefore, on the screen SC600 illustrated in FIG. 6, only the image 603 corresponding to the region R3 is displayed (output) in a form different from the other images 600 to 602. With the screen SC600 configured in this way, it is possible to visually recognize that the detection result that the obstacle has been detected in the region R3 and no obstacle has been detected in the other regions R0 to R2 has been obtained by the detection range setting unit 121.

In the first embodiment, both presence or absence of the obstacle and the distance to the obstacle can be output (simultaneously) as the detection result. Therefore, in the screen SC600 illustrated in FIG. 6, a detected distance to the obstacle (actually not illustrated in FIG. 6) may be output near the image 603. With such a configuration, not only presence or absence of the obstacle but also the distance to the obstacle can be visually recognized, which is beneficial.

In the first embodiment, an output form of the detection result can be changed according to a predetermined criterion. The predetermined criterion may be, for example, a plurality of reference values set in advance according to a degree of danger. In the first embodiment, the degree of danger of the detection result is determined by comparing the detection result digitized by a predetermined method with the reference values, and the output form of the detection result can be changed according to the determined degree of danger. With such a configuration, for example, when the detection result with a high degree of danger is obtained, it is possible to give notice according to circumstances, such as strong call for attention at the time of notification.

In the first embodiment, a screen other than the screen SC600 described above can be used as the notification screen output for notifying the detection result.

FIG. 7 is an exemplary and schematic diagram illustrating another example of the notification screen provided by the safe-driving assistance apparatus 100 according to the first embodiment, which is different from FIG. 6. A screen SC700 illustrated in FIG. 7 does not output the detection results corresponding to the detection ranges as they are like the screen SC600 illustrated in FIG. 6, but outputs the detection results by categorizing them into three types of detection results of front, front right, and front left in the traveling direction of the railroad vehicle RV.

That is, three images 700 to 702 are displayed on the screen SC700 illustrated in FIG. 7. The image 700 indicates presence or absence of the obstacle in the region R0 on the railroad track RL forward in the traveling direction of the railroad vehicle RV, the image 701 collectively indicates presence or absence of the obstacle in the regions R1 and R3 on the front right side in the traveling direction of the railroad vehicle RV, and the image 702 indicates presence or absence of the obstacle in the region R2 on the front left side in the traveling direction of the railroad vehicle RV. On the screen SC700, only the image 701 is displayed (output) in a form different from the other images 700 and 702. Therefore, with the screen SC700, it is possible to easily visually recognize that there is the obstacle in at least one of regions R1 and R3 corresponding to the image 701.

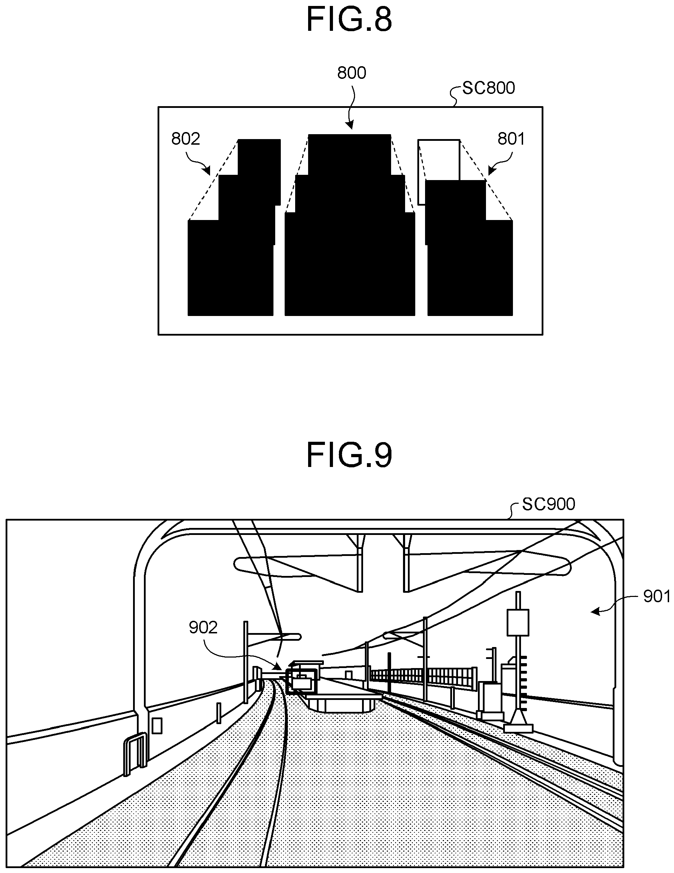

FIG. 8 is an exemplary and schematic diagram illustrating still another example of the notification screen provided by the safe-driving assistance apparatus 100 according to the first embodiment, which is different from FIGS. 6 and 7. A screen SC800 illustrated in FIG. 8 is similar to the screen SC700 illustrated in FIG. 7 in that the screen SC800 outputs the detection results by categorizing them into the three types of detection results of front, front right, and front left in the traveling direction of the railroad vehicle RV, however, the screen SC800 is different from the screen SC700 illustrated in FIG. 7 in that not only presence or absence of the obstacle but also a rough distance to the obstacle can be easily visually recognized.

More specifically, three image groups 800 to 802 are displayed on the screen SC800 illustrated in FIG. 8. The image group 800 indicates the detection result in the region R0 on the railroad track RL forward in the traveling direction of the railroad vehicle RV, the image group 801 collectively indicates the detection results in the regions R1 and R3 on the front right side in the traveling direction of the railroad vehicle RV, and the image group 802 indicates the detection result in the region R2 on the front left side in the traveling direction of the railroad vehicle RV.

Each of the image groups 800 to 802 on the screen SC800 illustrated in FIG. 8 includes three images arranged in a depth direction of the screen SC800. The frontmost image out of the three images corresponds to a region closest to the railroad vehicle RV in the detection range, the rearmost image corresponds to a region farthest from the railroad vehicle RV in the detection range, and an intermediate image corresponds to a region at a medium distance from the railroad vehicle RV in the detection range. On the screen SC800, only the rearmost image in the image group 801 is displayed (output) in a form different from the other images. Therefore, with the screen SC800, it is possible to easily visually recognize that there is the obstacle in a front right and far region (for example, the region R3) in the traveling direction of the railroad vehicle RV.

FIG. 9 is an exemplary and schematic diagram illustrating still another example of the notification screen provided by the safe-driving assistance apparatus 100 according to the first embodiment, which is different from FIGS. 6 to 8. A screen SC900 illustrated in FIG. 9 does not display the detection result schematically as illustrated in FIGS. 6 to 8, but outputs the detection result by superimposing it on the captured image obtained by the camera 50, to overlay and notify the detection result on an actual field of view from the railroad vehicle RV.

That is, the screen SC900 illustrated in FIG. 9 is formed by superimposing a symbol 902 indicating that there is the obstacle on a background image 901 based on the captured image obtained by the camera 50. Thus, by looking at the image SC900, it is possible to easily visually recognize presence or absence of the obstacle and the distance to the obstacle along with the actual field of view from the railroad vehicle RV.

As described above, the safe-driving assistance apparatus 100 according to the first embodiment includes: the storage unit 142 that stores the detection range information 142a indicating the correspondence between the position of the railroad vehicle RV and the detection range where the information about the obstacle present in the traveling direction of the railroad vehicle RV is to be detected; the travel distance acquisition unit 111 and the position calculator 141 that are a position acquisition unit for acquiring the current position of the railroad vehicle RV; the detection range acquisition unit 143 that acquires the detection range corresponding to the current position based on the current position acquired by the position acquisition unit and the detection range information 142a stored in the storage unit 142; the detector 122 that detects the information about the obstacle from the detection range acquired by the detection range acquisition unit 143; and the output unit 431 that outputs the detection result of the detector 122. Thus, without providing the cameras over all sections of the railroad track RL, based on the detection range corresponding to the position of the railroad vehicle RV, it is possible to detect the information about the obstacle that may be present in the traveling direction of the railroad vehicle RV with high accuracy over the entire traveling range of the railroad vehicle RV.

### <Second Embodiment>

In the above-described first embodiment, the position of the railroad vehicle RV is obtained as the traveling distance calculated based on the output of the speed generator (tachogenerator) provided on the axle. However, the position of the railroad vehicle RV may be obtained by other ways. For example, as in a second embodiment described below, the position of the railroad vehicle RV may be obtained as an absolute position specified by using Global Positioning System (GPS), Global Navigation Satellite System (GNSS), or the like.

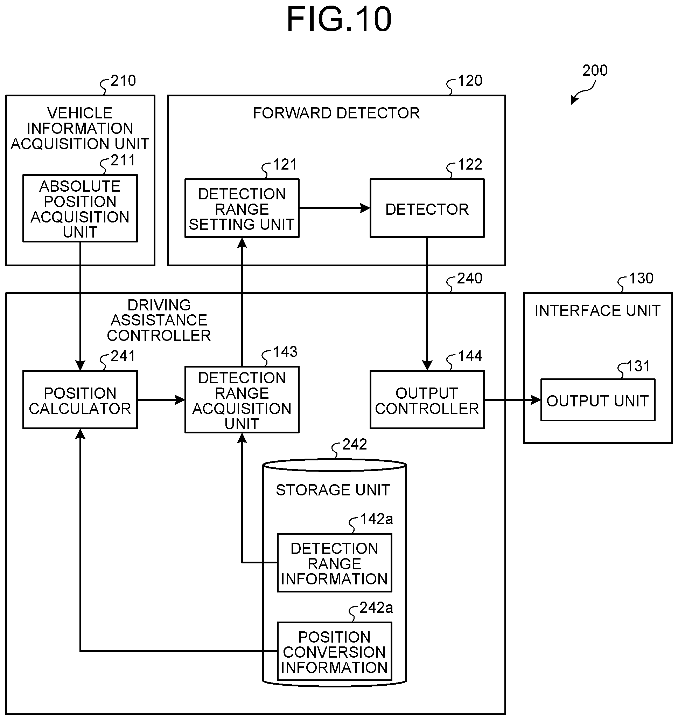

FIG. 10 is an exemplary and schematic block diagram illustrating functions of a safe-driving assistance apparatus 200 according to the second embodiment. Functions different from the functions of the safe-driving assistance apparatus 100 (See FIG. 2) according to the first embodiment will be mainly described below.

As illustrated in FIG. 10, a vehicle information acquisition unit 210 according to the second embodiment has an absolute position acquisition unit 211 that acquires an absolute value (latitude and longitude) of the railroad vehicle RV by using GPS, GNSS, or the like. The absolute position acquired by the absolute position acquisition unit 211 is output to a position calculator 241 of a driving assistance controller 240.

The position calculator 241 converts the absolute position acquired from the absolute position acquisition unit 211 into a unit of kilometrage that indicates the traveling distance of the railroad vehicle RV from the specific point as the starting point, based on the absolute position acquired from the absolute position acquisition unit 211 and position conversion information 242a stored in a storage unit 242 of the driving assistance controller 240.

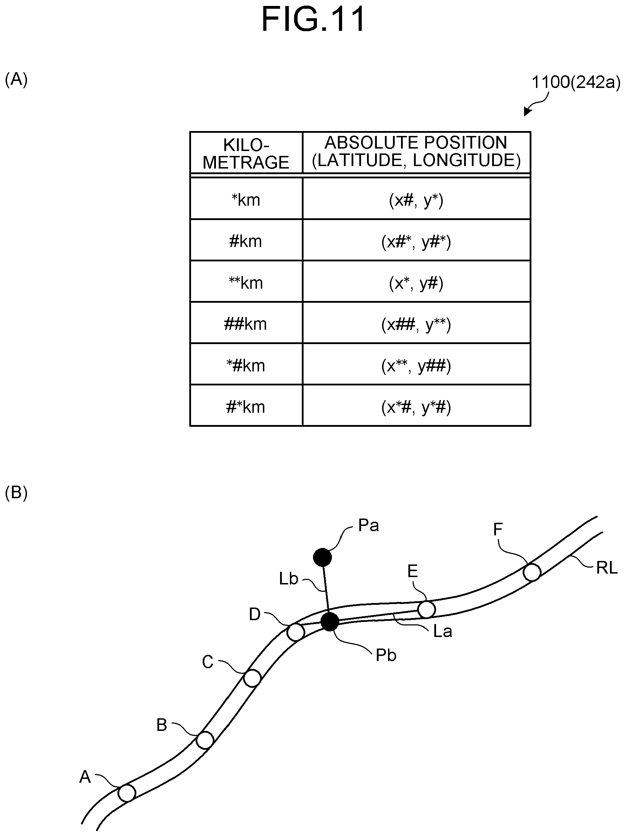

FIG. 11 is an exemplary and schematic diagram illustrating examples of the position conversion information 242a held by the safe-driving assistance apparatus 200 according to the second embodiment and a method of using the position conversion information 242a. The position conversion information 242a is stored in the storage unit 242 as information 1100 in a table format as illustrated in FIG. 11(A). The information 1100 illustrated in FIG. 11(A) specifies a correspondence between the kilometrage and the absolute position at a plurality of points on the railroad track RL (for example, points A to F in an example illustrated in FIG. 11(B)). Hereinafter, a method of converting the absolute position to the kilometrage using the information 1100 illustrated in FIG. 11(A) will be described more specifically with reference to FIG. 11(B).

In FIG. 11(B), a point Pa indicates the absolute position acquired from the absolute position acquisition unit 211. When calculating the kilometrage indicating the position of the railroad vehicle RV based on the absolute position (latitude and longitude) of the point Pa, the position calculator 241 first specifies the point D closest to the point Pa and the point E second closest to the point Pa from the points A to F on the railroad track RL specified in the information 1100 illustrated in FIG. 11(A). Then, the position calculator 241 acquires the absolute positions of the points D and E by referring to the information 1100 illustrated in FIG. 11(A), and defines the coordinate system with the point D as an origin.

Then, in the coordinate system having the point D as the origin, the position calculator 241 sets, as a point Pb, a foot of a perpendicular line Lb that is drawn from the point Pa to a straight line La connecting the point D and the point F, and calculates a distance between the point Pb and the point D as the origin. Then, the position calculator 241 focuses on a magnitude relationship between the kilometrage of the points D and F specified by the information 1100 illustrated in FIG. 11(A) and on the position of the point Pb, and calculates the kilometrage of the current position of the railroad vehicle RV by adding or subtracting the distance between the point D and the point Pb to or from the kilometrage of the point D.

Other configurations and operations of the second embodiment are similar to those of the first embodiment. Therefore, the process after the current position of the railroad vehicle RV has been calculated as the kilometrage as described above is similar to that in the first embodiment. That is, returning to FIG. 10, the position calculator 241 outputs the current position of the railroad vehicle RV calculated as the kilometrage to the detection range acquisition unit 143, and the detection range acquisition unit 143 acquires the detection range based on the current position acquired from the position calculator 241 and the detection range information 142a stored in the storage unit 242. Then, the forward detector 120 detects the information about the obstacle, and the interface unit 130 notifies the driver or the like of the railroad vehicle RV of the detection result.

As described above, according to the second embodiment, without using the kilometrage as the index indicating the position of the railroad vehicle RV, it is possible to detect the information about the obstacle from an appropriate detection range specified based on the highly concrete absolute position represented by latitude and longitude, and to notify the driver or the like of the railroad vehicle RV of the detection result.

In the second embodiment described above, it is necessary to store the position conversion information 242a for converting between the kilometrage and the absolute position in the storage unit 242. However, as in a modification described below, when the detection range information 142a holds information representing the correspondence between the kilometrage and the absolute position, the position conversion information 242a is unnecessary.

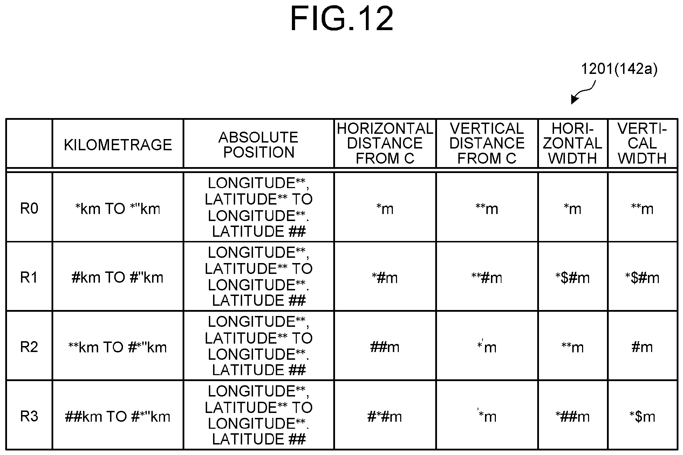

FIG. 12 is an exemplary and schematic diagram illustrating an example of the detection range information 142a according to the modification of the second embodiment. In the modification of the second embodiment, the detection range information 142a is stored as information 1201 in a table format as illustrated in FIG. 12. The information 1201 is different from the information 501 illustrated in FIG. 4(A), and holds the "kilometrage" and the "absolute position" that represents contents of the "kilometrage" in latitude and longitude as information representing the depths of the regions R0 to R3 as the detection range. Therefore, with the information 1201, the detection range can be specified without converting between the absolute position and the kilometrage using the position conversion information 242a as in the second embodiment.

### <Third Embodiment>

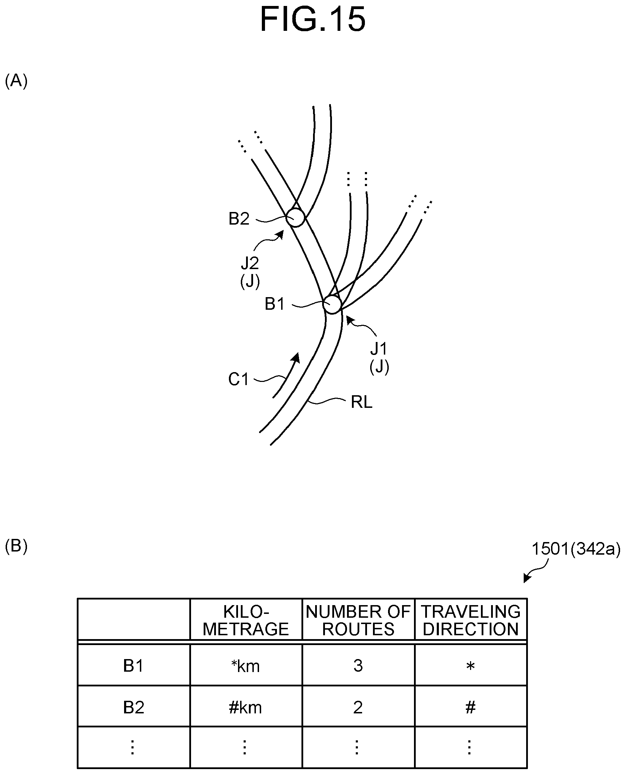

In the above-described first embodiment, the detection range corresponding to the position of the railroad vehicle RV is specified based on the position of the railroad vehicle RV and the detection range information 142a. However, in order to specify the detection range that better suits the circumstances, it is possible to further consider other information. For example, when a branch J (See FIG. 15 or the like described below) is present on the railroad track RL, it is effective when the detection range can be specified in consideration of the traveling direction beyond the branch J of the railroad vehicle RV as in a third embodiment described below.

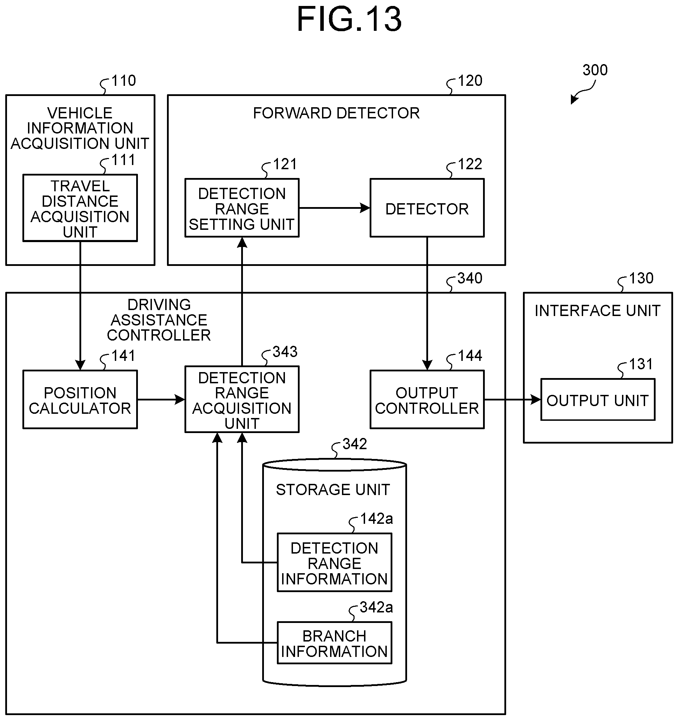

FIG. 13 is an exemplary and schematic block diagram illustrating functions of a safe-driving assistance apparatus 300 according to the third embodiment. Functions different from the functions which the safe-driving assistance apparatus 100 (See FIG. 2) according to the first embodiment will be mainly described below.

As illustrated in FIG. 13, in the third embodiment, a storage unit 342 of a driving assistance controller 340 stores the detection range information 142a similar to that of the first embodiment and branch information 342a on the branch J of the railroad track RL. Then, the detection range acquisition unit 243 acquires the detection range based on the branch information 342a in addition to the position of the railroad vehicle RV obtained from the position calculator 141 and the detection range information 142a. A specific example of the branch information 342a will be described below.

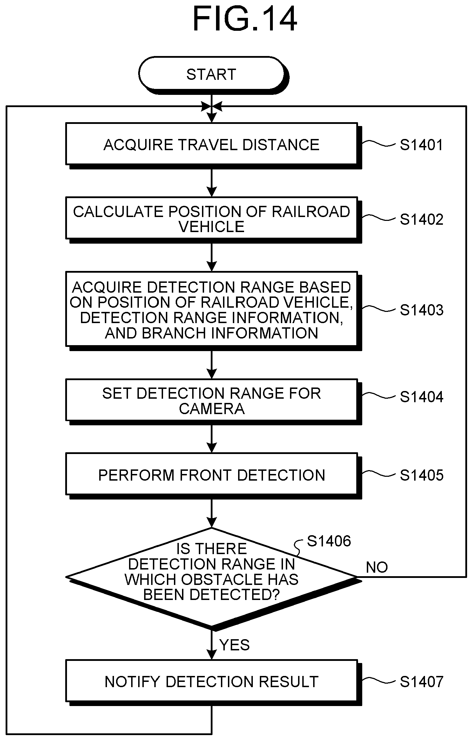

FIG. 14 is an exemplary and schematic flowchart illustrating an example of flow of a process performed by each unit of the safe-driving assistance apparatus 300 according to the third embodiment. The process flow illustrated in FIG. 14 is common to most of the process flow (See FIG. 3) according to the first embodiment. More specifically, S1401, S1402, and S1404 to S1407 in FIG. 14 are respectively the same as S301, S302, and S304 to S307 in FIG. 3. Therefore, only S1403 unique to the third embodiment will be described below.

In the third embodiment, in S1403, the detection range acquisition unit 343 of the driving assistance controller 340 acquires the detection range that is the range where the information about the obstacle present in the traveling direction of the railroad vehicle RV is to be detected. The detection range is acquired based on the current position obtained from the position calculator 141, the detection range information 142a stored in the storage unit 342 of the driving assistance controller 340, and the branch information 342a stored in the storage unit 342 together with the detection range information 142a.

FIG. 15 is an exemplary and schematic diagram illustrating examples of the branch J and the branch information 342a on the branch J according to the third embodiment. For example, when two branches J1 and J2 as illustrated in FIG. 15(A) are present in the railroad track RL, the branch information 342a is held as information 1501 in a table format as illustrated in FIG. 15(B).

The information 1501 illustrated in FIG. 15(B) holds a correspondence among the "kilometrage" indicating positions of a point B1 where the branch J1 is present and a point B2 where the branch J2 is present, "the number of routes" indicating the number of railroad tracks RL branched by the branches J1 and J2, and the "traveling direction" indicating which route the railroad vehicle RV selects at the branches J1 and J2. The "number of routes" is based on an assumption that the railroad vehicle RV travels in a direction of arrow C1 in an example illustrated in FIG. 15(A). The "traveling direction" is determined based on operation information about an operation of the railroad track RL, travel information such as a timetable of the railroad vehicle RV, and the like.

According to the information 1501 illustrated in FIG. 15(B), for example, the following detection range can be specified.

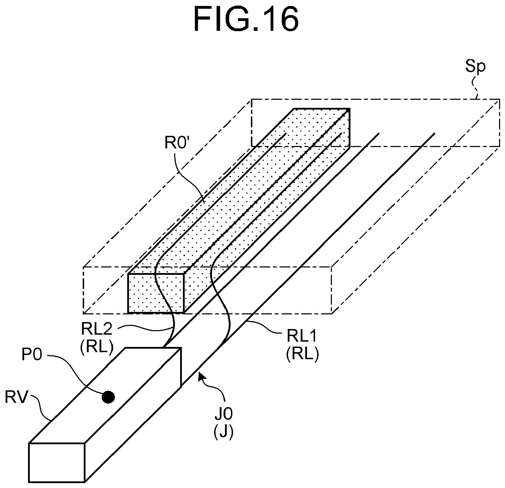

FIG. 16 is an exemplary and schematic diagram illustrating an example of the detection range according to the third embodiment. As illustrated in FIG. 16, in the third embodiment, when the railroad vehicle RV enters a railroad track RL2 through a branch J0 without going straight on a railroad track RL1, a region R0' on the railroad track RL2 that matches the traveling direction of the railroad vehicle RV is obtained as the detection range instead of a region on the railroad track RL1. Therefore, according to the third embodiment, even when the branch J is present on the railroad track RL, it is possible to detect the information about the obstacle from an appropriate detection range that matches the traveling direction of the railroad vehicle RV.

### <Fourth Embodiment>

In the above-described first embodiment, the detection result of the information about the obstacle is not stored, however, when the detection result is stored, it is possible to statistically specify, for example, a region where the obstacle is frequently present, which is beneficial. Further, in the configuration like the above-described first embodiment, it is convenient when the detection range can be manually adjusted. Therefore, in a fourth embodiment, a configuration described below realizes utilization of storage of the detection result of the information about the obstacle, and manual adjustment of the detection range.

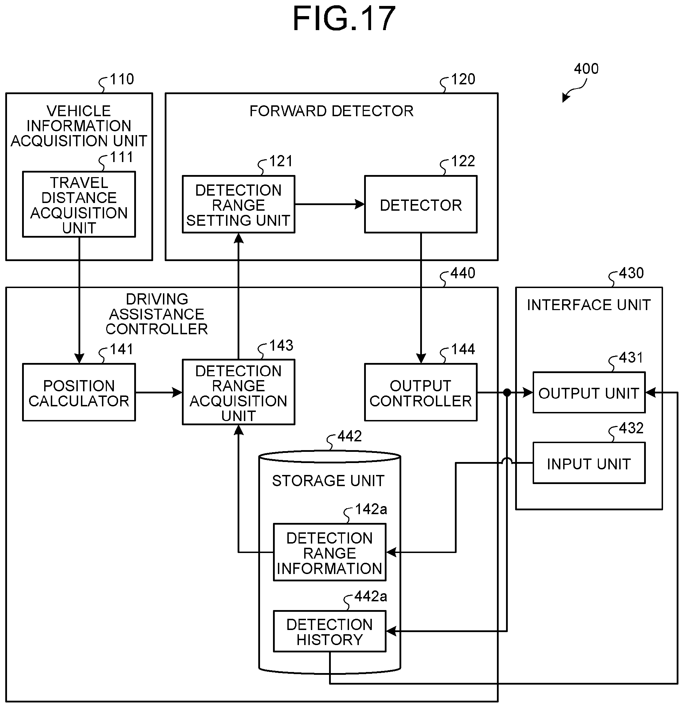

FIG. 17 is an exemplary and schematic block diagram illustrating functions of a safe-driving assistance apparatus 400 according to the fourth embodiment. Functions different from the functions of the safe-driving assistance apparatus 100 (See FIG. 2) according to the first embodiment will be mainly described below.

As illustrated in FIG. 17, in the fourth embodiment, a storage unit 442 of a driving assistance controller 440 stores the detection result of the information about the obstacle and holds it as detection history 442a. The detection history 442a is transmitted to an output unit 431 of an interface unit 430. When outputting the detection result to the driver or the like, the output unit 431 changes the output form of the detection result in accordance with an occurrence frequency of the obstacle specified based on the detection history 442a. Thus, it is possible to give notice according to the circumstances, such as stronger call for attention, for example, when a region for which the detection result is being currently notified corresponds to a region where the occurrence frequency of the obstacle is high. It should be noted that a user (the driver or the like) can appropriately set or change what notice is to be given according to the occurrence frequency.

As illustrated in FIG. 17, in the fourth embodiment, an input unit 432 of the interface unit 430 receives the operation input of the user (driver or the like), and according to the received operation input, the detection range information 142a stored in the storage unit 442 can be changed. This allows the user to manually adjust the detection range (including addition and deletion).

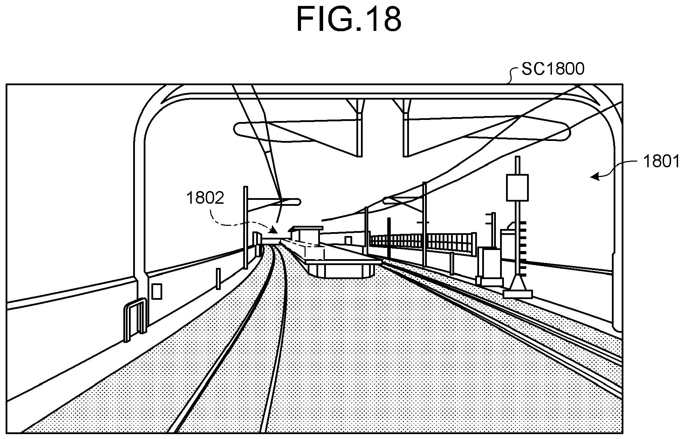

The input unit 432 receives the manual adjustment of the detection range by the user, for example, by providing a setting screen as illustrated in FIG. 18.

FIG. 18 is an exemplary and schematic diagram illustrating an example of the setting screen for manually setting the detection range provided by the safe-driving assistance apparatus 400 according to the fourth embodiment. In a screen SC1800 illustrated in FIG. 18, as an example, a symbol 1802 indicating a currently set detection range is superimposed on a background image 1801 based on the captured image obtained by the camera 50. With the screen SC1800, since the detection range in the actual field of view can be visually recognized, it is possible to adjust the detection range intuitively and easily.

The above-described first to fourth embodiments can be implemented in an appropriate combination. For example, a configuration may be employed in which when a travel section of the railroad vehicle RV is a section such as a tunnel in which radio waves from satellites are hard to reach, the position of the railroad vehicle RV is obtained as the kilometrage as in the first, third, or fourth embodiment, and in other cases, the position of the railroad vehicle RV is obtained as the absolute position as in the second embodiment.

In the above-described first embodiment (also in the second to fourth embodiments), data stored in the storage unit 142 may be stored in advance, or may be obtained through communication with the outside during traveling.

Although the embodiments of the present invention have been described above, the above embodiments are mere examples, and are not intended to limit the scope of the invention. The above embodiments can be implemented in various forms, and can be variously omitted, replaced, and changed without departing from the gist of the invention. The above embodiments and their modifications are included in the scope and gist of the invention, and are also included in the invention described in the claims and its equivalent scope.

## Claims

1. A safe-driving assistance apparatus comprising:
a storage unit configured to store detection range information representing a correspondence between a position of a railroad vehicle and a detection range where information about an obstacle present in a traveling direction of the railroad vehicle is to be detected;
a position acquisition unit configured to acquire a current position of the railroad vehicle;
a detection range acquisition unit configured to acquire the detection range corresponding to the current position, the detection range being acquired based on the current position acquired by the position acquisition unit and the detection range information stored in the storage unit;
a detector configured to detect information about the obstacle from the detection range acquired by the detection range acquisition unit; and
an output unit configured to output a detection result of the detector.

2. The safe-driving assistance apparatus according to claim 1, wherein
the storage unit further stores branch information about a branch of a railroad track on which the railroad vehicle travels, and
the detection range acquisition unit acquires the detection range corresponding to the current position and the traveling direction of the railroad vehicle beyond the branch, the detection range being acquired based on the branch information stored in the storage unit in addition to the current position acquired by the position acquisition unit and the detection range information stored in the storage unit.

3. The safe-driving assistance apparatus according to claim 1 or 2, wherein the position acquisition unit acquires the current position as an absolute position represented by latitude and longitude or as a travel distance of the railroad vehicle.

4. The safe-driving assistance apparatus according to any one of claims 1 to 3, wherein
the detection range includes a plurality of detection ranges,
the detector detects the information about the obstacle from each of the detection ranges, and
the output unit outputs the detection result in a form capable of identifying which of the detection ranges is obtained as a target.

5. The safe-driving assistance apparatus according to any one of claims 1 to 4, wherein the output unit outputs, as the detection result, presence or absence of the obstacle and a distance to the obstacle.

6. The safe-driving assistance apparatus according to any one of claims 1 to 5, wherein the output unit changes an output form of the detection result in accordance with a predetermined criterion.

7. The safe-driving assistance apparatus according to any one of claims 1 to 6, wherein
the storage unit further stores a history of the detection result, and
the output unit changes an output form of the detection result in accordance with frequency of occurrence of the obstacle specified based on the history.

8. The safe-driving assistance apparatus according to any one of claims 1 to 7, wherein the detector detects the information about the obstacle from a region corresponding to the detection range in a captured image obtained by a camera provided to the railroad vehicle, the camera being provided such that a region in the traveling direction of the railroad vehicle is captured.

9. The safe-driving assistance apparatus according to claim 8, wherein the output unit outputs the detection result by superimposing the detection result onto the captured image.

10. The safe-driving assistance apparatus according to any one of claims 1 to 9, further comprising an input unit configured to receive an operation input of a user and change the detection range information in accordance with the received operation input.
